# EUROPÄISCHE PATENTANMELDUNG

(11) **EP 3 760 941 A1**
(43) Veröffentlichungstag der Anmeldung: **06.01.2021**
(21) Anmeldenummer: 20170328.7
(22) Anmeldetag: 20.04.2020
(51) Int. Cl.: F24F 13/02, F16L 23/036, F16L 23/14

(54) **VORRICHTUNG ZUM VERSPANNEN VON RAHMENPROFILEN AN LÜFTUNGSKANÄLEN**

(30) Priorität: 01.07.2019 DE 202019103599 U
(71) Anmelder: Gebhardt-Stahl GmbH, 59457 Werl (DE)
(72) Erfinder: Schweins, Meinolf, 59457 Werl (DE); Hoffmeister, Bernd, 59469 Ense (DE)
(74) Vertreter: Meinke, Jochen

(57) **Zusammenfassung**

Eine Vorrichtung zum Verspannen von einen Stirnseitenrahmen bildenden Rahmenprofilen (3) an Lüftungskanälen mit einem querschnittlich C-förmigen Profilelement (2), dessen C-Schenkel (2a,2b) in Montagelage zwei benachbarte Rahmenprofile (3) klemmend außenseitig umgreifen, wobei das C-förmige Profilelement (2) einen Einführbereich (4) zum seitlichen Aufschieben auf die benachbarten Rahmenprofile (3) und in Längsrichtung daran angrenzend einen Klemmbereich (5) aufweist, wobei der Abstand (A1) der C-Schenkel (2a,2b) im Einführbereich (4) größer als der Abstand (A2) im Klemmbereich (5) ist, wobei sich der Abstand der C-Schenkel (2a,2b) vom Außenrand (4a) des Einführbereiches (4) bis zum Klemmbereich (5) stetig verringert, soll so verbessert werden, dass sie eine höhere Stabilität und damit eine bessere Klemmkraft aufweist, wobei die Montage außerdem vereinfacht werden soll.

Dies wird dadurch erreicht, dass der C-Steg (2c) des Profilelementes (2) im Klemmbereich (5) dachförmig mit zwei im stumpfen Winkel (α) zueinander angeordneten Stegabschnitten (S1,S2) ausgebildet ist.

## Beschreibung

Die Erfindung betrifft eine Vorrichtung zum Verspannen von einen Stirnseitenrahmen bildenden Rahmenprofilen an Lüftungskanälen mit einem querschnittlich C-förmigen Profilelement, dessen C-Schenkel in Montagelage zwei benachbarte Rahmenprofile klemmend außenseitig umgreifen, wobei das C-förmige Profil einen Einführbereich zum seitlichen Aufschieben auf die benachbarten Rahmenprofile und in Längsrichtung daran angrenzend einen Klemmbereich aufweist, wobei der Abstand der C-Schenkel im Einführbereich größer als der Abstand im Klemmbereich ist, wobei sich der Abstand der C-Schenkel vom Außenrand des Einführbereiches bis zum Klemmbereich stetig verringert.

Lüftungskanäle werden in der Regel aus gefalzten Blechtafeln hergestellt, die an ihren jeweiligen Stirnseiten mit aus Metallrahmenprofilen gebildeten Verspannrahmen ausgerüstet sind, um die einzelnen Kanalelemente nacheinander anordnen und miteinander verspannen zu können. Da die Spannkraft in der Regel über vier Eckwinkel aufgebracht wird, die in die Rahmenprofile eingreifen, besteht die Gefahr, dass die die Stirnseitenrahmen bildenden Rahmenprofile beabstandet von den Ecken auseinander gepresst werden können, so dass es zu Leckagen kommen kann. Deshalb sind die den Stirnseitenrahmen bildenden Rahmenprofile im oberen Bereich mit Fixierwülsten ausgerüstet, die von Vorrichtungen zum Verspannen in Form von Klemmelementen oder Klemmbügeln klemmend übergriffen werden.

Bekannt sind zum Beispiel Klemmbügel mit Fixier- oder Spannschraube, welche benachbarte Fixierwülste zweier Rahmenprofile übergreifen und durch Anziehen der Spannschraube gegeneinander dicht verklemmen. Eine solche Vorrichtung ist zum Beispiel aus EP 2 020 554 A2 bekannt.

In der Praxis werden auch Vorrichtungen mit den Merkmalen des Oberbegriffs des Schutzanspruchs 1 eingesetzt, welche keine Fixierschraube benötigen. Diese sehr kurzen Klemmbügel werden seitlich mit ihrem Einführbereich auf benachbarte Rahmenprofile aufgesetzt und anschließend mit einem Hammer oder anderen Werkzeugen an die gewünschte Klemmstelle verschoben. Diese bekannten Vorrichtungen sind jedoch relativ klein und instabil, so dass sie sich in der Praxis bisher kaum durchgesetzt haben.

Aufgabe der Erfindung ist es, eine solche Vorrichtung so zu verbessern, dass sie eine höhere Stabilität und damit eine bessere Klemmkraft aufweist, wobei die Montage außerdem vereinfacht werden soll.

Diese Aufgabe wird bei einer Vorrichtung der eingangs bezeichneten Art erfindungsgemäß dadurch gelöst, dass der C-Steg des Profilelementes im Klemmbereich dachförmig mit im stumpfen Winkel zueinander angeordneten Stegabschnitten ausgebildet ist.

Mit dieser Gestaltung wird einerseits die Stabilität des Klemmbereiches der Vorrichtung verbessert, andererseits werden durch die dachförmige Ausgestaltung die beiden nach innen gerichteten Schenkel zusätzlich gegen die Seitenränder der Rahmenprofile gepresst, so dass eine höhere Klemmkraft erreicht wird.

Bevorzugt ist dabei vorgesehen, dass der stumpfe Winkel zwischen den beiden Stegabschnitten zwischen 150° und 170° beträgt.

Zur Vereinfachung der Montage ist vorgesehen, dass in Längsrichtung gesehen der Einführbereich gegenüber dem Klemmbereich geneigt ausgerichtet ist, und zwar so, dass in Montagelage der Einführbereich leicht nach außen absteht, während der Klemmbereich parallel zu den Rändern der Rahmenprofile ausgerichtet ist. Durch diese Neigung lässt sich das Aufschieben der Vorrichtung auf die Rahmenprofile vereinfachen, insbesondere dann, wenn im Bereich der Eckwinkel Befestigungsschrauben herausragen.

Ferner wird die Montage dadurch vereinfacht, dass an der in Montagelage den Rahmenprofilen abgewandten Außenseite des Profilelementes ein Vorsprung zur Anlage eines Montagewerkzeuges ausgebildet ist. Die Vorrichtung kann dann auf einfache Weise mit einem Hammer oder dergleichen an die gewünschte Stelle verschoben werden, indem der Vorsprung als Anlage für das Montagewerkzeug dient.

Dabei ist der Vorsprung bevorzugt stegförmig ausgebildet.

Das Profilelement besteht insgesamt bevorzugt aus Blech und ist besonders bevorzugt als Stanzbiegeteil ausgebildet.

Die Erfindung ist nachstehend anhand der Zeichnung beispielhaft näher erläutert. Diese zeigt in
- Fig. 1: eine erste perspektivische Darstellung der Vorrichtung,
- Fig. 2: eine zweite perspektivische Darstellung der Vorrichtung,
- Fig. 3: eine Seitenansicht der Vorrichtung von links im Sinne der Fig. 1,
- Fig. 4: eine Längsansicht der Vorrichtung,
- Fig. 5: eine Seitenansicht von rechts im Sinne der Fig. 1,
- Fig. 6: eine perspektivische Darstellung der Vorrichtung von unten,
- Fig. 7: eine zweite perspektivische Darstellung der Vorrichtung von unten,
- Fig. 8: eine Draufsicht auf einen bereichsweise dargestellten Lüftungskanal,
- Fig. 9: ein vergrößertes Detail A in Fig. 8,
- Fig. 10: eine perspektivische Darstellung eines vereinfacht dargestellten Lüftungskanals und
- Fig. 11: ein vergrößertes Detail B in Fig. 10.

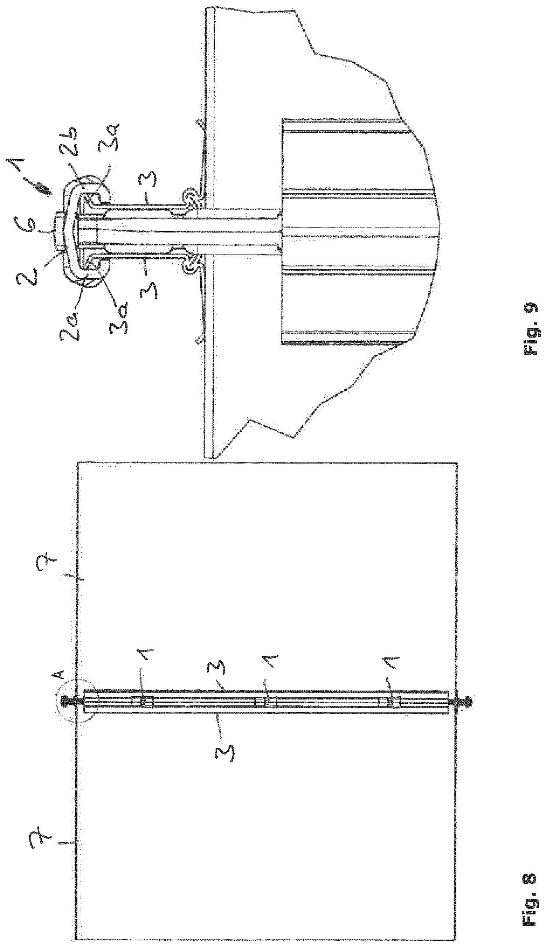

Eine Vorrichtung zum Verspannen von einen Stirnseitenrahmen bildenden Rahmenprofilen an Lüftungskanälen ist allgemein mit 1 bezeichnet. Die Vorrichtung 1 weist ein querschnittlich C-förmiges Profilelement 2 auf, dessen C-Schenkel 2a, 2b in Montagelage zwei benachbarte Rahmenprofile 3 klemmend außenseitig umgreifen, wobei die Rahmenprofile 3 außenseitig jeweils vorzugsweise einen Wulstbereich 3a aufweisen (Fig. 9), der sich in Montagelage jeweils innerhalb des C-förmigen Profilelementes 2 befindet.

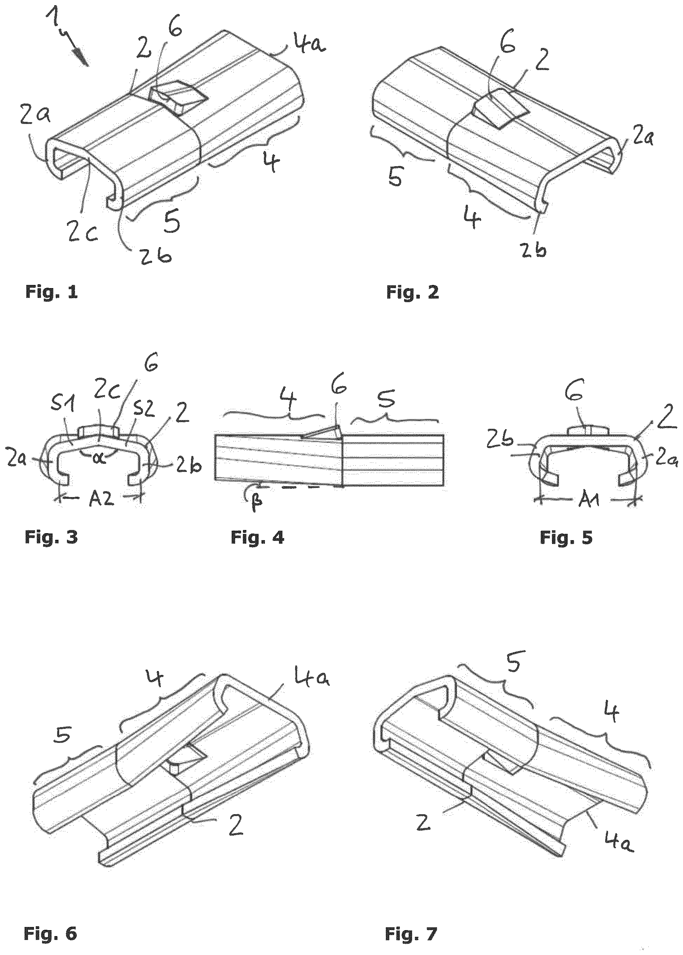

Das C-förmige Profilelement 2 weist einen Einführbereich 4 zum seitlichen Aufschieben auf die benachbarten Rahmenelemente 3 und in Längsrichtung daran angrenzend einen Klemmbereich 5 auf, wobei der Abstand A1 der C-Schenkel 2a, 2b im Einführbereich 4 größer als der Abstand A2 im Klemmbereich 5 ist, wobei sich der Abstand der C-Schenkel 2a, 2b vom Außenrand 4a des Einführbereichs 4 bis zum Klemmbereich 5 stetig verringert, d.h. in Längsrichtung gesehen laufen die C-Schenkel 2a, 2b konisch aufeinander zu, wie am besten in den Fig. 6 und 7 zu erkennen ist.

Der C-Steg 2c im Klemmbereich 5 ist dachförmig mit zwei im stumpfen Winkel zueinander angeordneten Stegabschnitten S1, S2 ausgebildet. Dabei beträgt der stumpfe Winkel α zwischen den beiden Stegabschnitten S1 und S2 bevorzugt zwischen 150° und 170°.

Ferner ist bevorzugt vorgesehen, dass in Längsrichtung gesehen der Einführbereich 4 gegenüber dem Klemmbereich 5 geneigt ausgebildet ist, wie am besten aus Fig. 4 hervorgeht. Der Neigungswinkel ist dort mit β bezeichnet.

Zur Vereinfachung der nachfolgend näher beschriebenen Montage der Vorrichtung 1 ist ferner vorgesehen, dass an der in Montagelage den Rahmenprofilen 3 abgewandten Außenseite des Profilelementes 2 ein Vorsprung 6 zur Anlage eines Montagewerkzeuges (zum Beispiel Hammer) ausgebildet ist. Dieser Vorsprung 6 ist bevorzugt stegförmig ausgebildet, wobei das Profilelement 2 insgesamt bevorzugt aus Blech besteht und als Stanzbiegeteil ausgebildet ist, so dass der Vorsprung 6 entsprechend beimStanz biegen geprägt werden kann.

Die Montage der Vorrichtung 1 ist in den Figuren 8 bis 11 dargestellt.

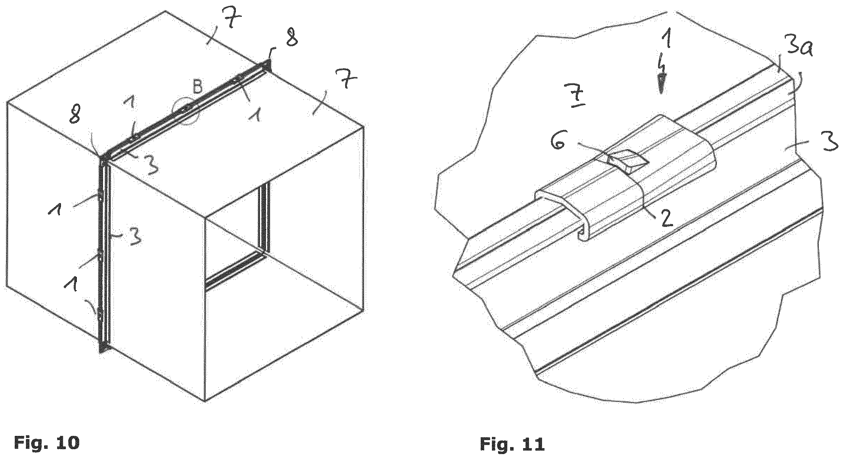

In den Fig. 8 und 10 sind zwei rohrförmige Lüftungskanalelemente, vorzugsweise in Rechteck- oder Quadratform, dargestellt und mit 7 bezeichnet. Diese Lüftungskanalelemente 7 sind stirnseitig jeweils mit umlaufenden Rahmenprofilen 3 fest und dicht verbunden, was für sich betrachtet bekannt ist und worauf es deshalb im Rahmen der Erfindung nicht näher ankommt. Jedes Rahmenprofil 3 erstreckt sich dabei entlang einer Seitenwand des Lüftungskanalelementes 7 und ist um 90° versetzt zu den benachbarten Rahmenprofilen 3 angeordnet. Die aneinander angrenzenden Rahmenprofile 3 sind über Eckwinkel 8 miteinander verbunden. Die jeweiligen Rahmenprofile 3 zweier benachbarte Luftkanalelemente 7 liegen stirnseitig aneinander an, wie am besten in den Fig. 9 und 11 zu erkennen ist. Um diese dicht miteinander zu verbinden, wird vorzugsweise zwischen den Rahmenprofilen 3 eine nicht dargestellte Dichtung angeordnet. Anschließend werden die Vorrichtungen 1 montiert. Dazu wird die jeweilige Vorrichtung 1 mit ihrem Einführbereich 4 im Bereich eines Eckwinkels 8 seitlich auf zwei benachbarte Rahmenprofile 3 aufgeschoben und anschließend mit einem Montagewerkzeug, zum Beispiel einem Hammer, entlang der beiden Rahmenprofile 3 verschoben, bis sich die Vorrichtung 1 an der gewünschten Position befindet. Beim Ausführungsbeispiel nach Fig. 10 sind zum Beispiel an jeder Seite drei Vorrichtungen 1 angeordnet.

Natürlich ist die Erfindung nicht auf die dargestellten Ausführungsbeispiele beschränkt. Weitere Ausgestaltungen sind möglich, ohne den Grundgedanken zu verlassen. So kann der Vorsprung 6 auch anders ausgestaltet sein oder im Einzelfall auch vollständig entfallen.

### Bezugszeichenliste:

- 1: Vorrichtung
- 2: Profilelement
- 2a: C-Schenkel
- 2b: C-Schenkel
- 2c: C-Steg
- 3: Rahmenprofil
- 3a: Wulstbereich
- 4: Einführbereich
- 4a: Außenkante
- 5: Klemmbereich
- 6: Vorsprung
- 7: Lüftungskanalelement
- 8: Eckwinkel

- A1: Abstand
- A2: Abstand
- S1: Stegabschnitt
- S2: Stegabschnitt

- α,β: Winkel

## Patentansprüche

1. Vorrichtung zum Verspannen von einen Stirnseitenrahmen bildenden Rahmenprofilen (3) an Lüftungskanälen mit einem querschnittlich C-förmigen Profilelement (2), dessen C-Schenkel (2a,2b) in Montagelage zwei benachbarte Rahmenprofile (3) klemmend außenseitig umgreifen, wobei das C-förmige Profilelement (2) einen Einführbereich (4) zum seitlichen Aufschieben auf die benachbarten Rahmenprofile (3) und in Längsrichtung daran angrenzend einen Klemmbereich (5) aufweist, wobei der Abstand (A1) der C-Schenkel (2a,2b) im Einführbereich (4) größer als der Abstand (A2) im Klemmbereich (5) ist, wobei sich der Abstand der C-Schenkel (2a,2b) vom Außenrand (4a) des Einführbereiches (4) bis zum Klemmbereich (5) stetig verringert,
**dadurch gekennzeichnet,**
**dass** der C-Steg (2c) des Profilelementes (2) im Klemmbereich (5) dachförmig mit zwei im stumpfen Winkel (α) zueinander angeordneten Stegabschnitten (S1,S2) ausgebildet ist.

2. Vorrichtung nach Anspruch 1,
**dadurch gekennzeichnet,**
**dass** der stumpfe Winkel (α) zwischen den beiden Stegabschnitten (S1,S2) zwischen 150° und 170° beträgt.

3. Vorrichtung nach Anspruch 1 oder 2,
**dadurch gekennzeichnet,**
**dass** in Längsrichtung gesehen der Einführbereich (4) gegenüber dem Klemmbereich (5) geneigt ausgerichtet ist.

4. Vorrichtung nach Anspruch 1, 2 oder 3,
**dadurch gekennzeichnet,**
**dass** an der in Montagelage den Rahmenprofilen (3) abgewandten Außenseite des Profilelementes (2) ein Vorsprung (6) zur Anlage eines Montagewerkzeuges ausgebildet ist.

5. Vorrichtung nach Anspruch 4,
**dadurch gekennzeichnet,**
**dass** der Vorsprung (6) stegförmig ausgebildet ist.

6. Vorrichtung nach einem oder mehreren der Ansprüche 1 bis 5,
**dadurch gekennzeichnet,**
**dass** das Profilelement (2) aus Blech besteht.

7. Vorrichtung nach Anspruch 6,
**dadurch gekennzeichnet,**
**dass** das Profilelement (2) als Stanzbiegeteil ausgebildet ist.
